# EUROPEAN PATENT APPLICATION

(11) **EP 4 684 703 A1**
(43) Date of publication of application: **28.01.2026**
(21) Application number: 23937336.8
(22) Date of filing: 25.12.2023
(51) Int. Cl.: A47J 36/32, A47J 36/24

(54) **COOKING CONTROL METHOD AND APPARATUS, MEDIUM, AND COOKING DEVICE**

(30) Priority: 16.05.2023 CN 202310555190
(71) Applicant: Gree Electric Appliances, Inc. of Zhuhai, Zhuhai, Guangdong 519070 (CN)
(72) Inventor: CHEN, Danhui, Zhuhai, Guangdong 519070 (CN); WEN, Hanjie, Zhuhai, Guangdong 519070 (CN); ZHANG, Miao, Zhuhai, Guangdong 519070 (CN); SHI, Lei, Zhuhai, Guangdong 519070 (CN); ZUO, Tingting, Zhuhai, Guangdong 519070 (CN); ZHANG, Wangli, Zhuhai, Guangdong 519070 (CN)
(74) Representative: Zacco GmbH
(86) International application number: PCT/CN2023/141690
(87) International publication number: WO 2024/234665

(57) **Abstract**

The present invention provides a cooking control method and apparatus, a medium and a cooking device. The method comprises: acquiring initial cooking parameters of a food material to be cooked in a cooking device; cooking the food material to be cooked according to the initial cooking parameters, and monitoring a first electrical conductivity of the food material to be cooked and energy obtained by the food material to be cooked in a cooking process; on the basis of a relationship between a standard electrical conductivity of the food material to be cooked at a cooking moment corresponding to the first electrical conductivity and the first electrical conductivity, adjusting the initial cooking parameters until the first electrical conductivity is equal to the standard electrical conductivity, and then restoring the initial cooking parameters; continuously cooking the food material to be cooked according to the initial cooking parameters, and terminating cooking when the energy obtained by the food material to be cooked reaches preset energy required for the food material to be cooked to reach a cooked state. By regulating controllable factors of a cooking process, on the basis of satisfying cooking requirements of food, the stability and intelligence of the cooking process are improved by maintaining a constant electrical conductivity, thereby improving the usage experience of users.

## Description

The present invention claims the priority based on the patent document filed on May 16, 2023, with application no. 202310555190.2, and entitled "Cooking Control Method and Apparatus, Medium, and Cooking Device", which is incorporated herein by reference in its entirety.

### Technical Field

The present invention relates to the technical field of electrical appliances, and in particular, to a cooking control method and apparatus, a medium, and a cooking device.

### Background

With the improvement of national living standards, quick and convenient cooking methods have become increasingly favored and preferred by young consumers. Compared to traditional heating methods, which often result in uneven internal temperature distribution, inconsistent quality, and high energy consumption, ohmic heating, as a promising new heating method, utilizes the dielectric properties of food itself. When an electric current passes through, electrical energy is converted into thermal energy within the food, enabling uniform heating and thus widely favored by users.

Ohmic heating is currently mainly used for thermal processing of food materials such as liquids and viscous substances. Compared to traditional heating methods, such as conduction, convection, and radiation, ohmic heating has advantages including rapid and uniform heating, precise control, high electrical energy conversion efficiency, and reduced scaling and scorching on heating surfaces. However, due to reactions occurring in the properties of foods such as liquids and viscous substances in a cooking process, changes in electrolytes occur, such that it is difficult to control the reaction rate. As a result, heating reactions are often hard to manage, such that it is challenging to ensure stable cooking results.

### Summary

In view of this, embodiments of the present invention provide a cooking control method and apparatus, a medium, and a cooking device to overcome the problem of unstable cooking results when using ohmic heating technology for food preparation in the related art, as identified by the inventor.

According to a first aspect, an embodiment of the present invention provides a cooking control method applied to a cooking device using ohmic heating for cooking, the method including:
initial cooking parameters of a food material to be cooked in a cooking device are acquired;
the food material to be cooked is cooked according to the initial cooking parameters, and a first electrical conductivity of the food material to be cooked and energy obtained by the food material to be cooked are monitored in a cooking process;
on the basis of a relationship between a standard electrical conductivity of the food material to be cooked at a cooking moment corresponding to the first electrical conductivity and the first electrical conductivity, the initial cooking parameters are adjusted until the first electrical conductivity is equal to the standard electrical conductivity, and then the initial cooking parameters are restored; and
the food material to be cooked is continuously cooked according to the initial cooking parameters, and cooking is terminated when the energy obtained by the food material to be cooked reaches preset energy required for the food material to be cooked to reach a cooked state.

Optionally, initial cooking parameters of a food material to be cooked in a cooking device are acquired, including:
a second electrical conductivity of the food material to be cooked when the food material to be cooked is placed in the cooking device is acquired;
a current food material category corresponding to the second electrical conductivity is determined on the basis of a relationship between electrical conductivity and food material category; and
the initial cooking parameters are determined on the basis of the current food material category.

Optionally, before a first electrical conductivity of the food material to be cooked is monitored, the method further includes:
an ambient temperature of a cooking environment in which the food material to be cooked is located is monitored in a cooking process; and
when the ambient temperature is in a stable state, the first electrical conductivity of the food material to be cooked is monitored.

Optionally, the initial cooking parameters include a total cooking duration; and before a first electrical conductivity of the food material to be cooked is monitored, the method further includes:
whether a ratio of a current cooking duration to the total cooking duration reaches a preset ratio is determined; and
when the ratio of the current cooking duration to the total cooking duration reaches the preset ratio, the first electrical conductivity of the food material to be cooked is monitored.

Optionally, energy obtained by the food material to be cooked is monitored in a cooking process, including:
a heating power of the cooking device for ohmic heating is monitored in the cooking process; and
an integration operation is performed on the basis of a relationship between the heating power and a current cooking duration to obtain the energy obtained by the food material to be cooked in the cooking process.

Optionally, the initial cooking parameters are adjusted on the basis of a relationship between a standard electrical conductivity of the food material to be cooked at a cooking moment corresponding to the first electrical conductivity and the first electrical conductivity, including:
when the standard electrical conductivity is less than the first electrical conductivity, a cooking temperature in the initial cooking parameters is reduced until the standard electrical conductivity is equal to the first electrical conductivity.

Optionally, the initial cooking parameters are adjusted on the basis of a relationship between a standard electrical conductivity of the food material to be cooked at a cooking moment corresponding to the first electrical conductivity and the first electrical conductivity, including:
when the standard electrical conductivity is greater than the first electrical conductivity, a cooking humidity in the initial cooking parameters is increased until the standard electrical conductivity is equal to the first electrical conductivity.

Optionally, the initial cooking parameters are adjusted on the basis of a relationship between a standard electrical conductivity of the food material to be cooked at a cooking moment corresponding to the first electrical conductivity and the first electrical conductivity, including:
when the standard electrical conductivity is equal to the first electrical conductivity, the initial cooking parameters are maintained.

According to a second aspect, an embodiment of the present invention provides a cooking control apparatus applied to a cooking device using ohmic heating for cooking, the apparatus including:
an acquisition module, configured to acquire initial cooking parameters of a food material to be cooked in a cooking device;
a first processing module, configured to cook the food material to be cooked according to the initial cooking parameters, and monitor a first electrical conductivity of the food material to be cooked and energy obtained by the food material to be cooked in a cooking process;
a second processing module, configured to adjust the initial cooking parameters on the basis of a relationship between a standard electrical conductivity of the food material to be cooked at a cooking moment corresponding to the first electrical conductivity and the first electrical conductivity, until the first electrical conductivity is equal to the standard electrical conductivity, and then restore the initial cooking parameters; and
a third processing module configured to continuously cook the food material to be cooked according to the initial cooking parameters, and terminate cooking when the energy obtained by the food material to be cooked reaches preset energy required for the food material to be to reach a cooked state.

Optionally, the acquisition module is specifically configured to:
acquire a second electrical conductivity of the food material to be cooked when the food material to be cooked is placed in the cooking device;
determine a current food material category corresponding to the second electrical conductivity on the basis of a relationship between electrical conductivity and food material category; and
determine the initial cooking parameters on the basis of the current food material category.

Optionally, before monitoring a first electrical conductivity of the food material to be cooked, the first processing module is further configured to:
monitor an ambient temperature of a cooking environment in which the food material to be cooked is located in the cooking process; and
when the ambient temperature is in a stable state, monitor the first electrical conductivity of the food material to be cooked.

Optionally, the initial cooking parameters include a total cooking duration; and before monitoring a first electrical conductivity of the food material to be cooked, the first processing module is further configured to:
determine whether a ratio of a current cooking duration to the total cooking duration reaches a preset ratio; and
when the ratio of the current cooking duration to the total cooking duration reaches the preset ratio, monitor the first electrical conductivity of the food material to be cooked.

Optionally, the first processing module monitors energy obtained by the food material to be cooked in a cooking process, specifically including:
a heating power of the cooking device for ohmic heating is monitored in the cooking process; and
an integration operation is performed on the basis of a relationship between the heating power and a current cooking duration to obtain the energy obtained by the food material to be cooked in the cooking process.

Optionally, the second processing module is specifically configured to:
when the standard electrical conductivity is less than the first electrical conductivity, reduce a cooking temperature in the initial cooking parameters until the standard electrical conductivity is equal to the first electrical conductivity.

Optionally, the second processing module is specifically configured to:
when the standard electrical conductivity is greater than the first electrical conductivity, increase a cooking humidity in the initial cooking parameters until the standard electrical conductivity is equal to the first electrical conductivity.

Optionally, the second processing module is specifically configured to:
when the standard electrical conductivity is equal to the first electrical conductivity, maintain the initial cooking parameters.

According to a third aspect, an embodiment of the present invention provides a cooking device. The cooking device is a cooking device using ohmic heating for cooking, and the cooking device includes: a controller; and
the controller includes: a memory and a processor, wherein the memory and the processor are in communication connection with each other, the memory stores computer instructions, and the processor executing the computer instructions to perform the cooking control method provided by the first aspect and any one of the optional embodiments thereof.

Optionally, the cooking device further includes:
a tank body configured to hold a food material to be cooked and two electrodes provided on two opposite sides inside the tank body; and
the two electrodes are connected to a power supply of the cooking device.

Optionally, the cooking device is one of a steam box, an oven, and a steam oven.

Optionally, the cooking device further includes one or more of: an electrical conductivity measuring device, a temperature measuring device, a humidity measuring device, a timing device, a steam generator, and an air exhaust device.

According to a fourth aspect, an embodiment of the present invention provides a computer-readable storage medium. The computer-readable storage medium stores computer instructions, and the computer instructions are configured to cause a computer to perform the cooking control method according to the first aspect or any one of the optional embodiments of the first aspect.

The technical solution of the present invention has the following advantages:
1. A cooking control method provided in an embodiment of the present invention is applied to a cooking device using ohmic heating for cooking. According to the method, initial cooking parameters of a food material to be cooked in a cooking device are acquired; the food material to be cooked is cooked according to the initial cooking parameters, and a first electrical conductivity of the food material to be cooked and energy obtained by the food material to be cooked are monitored in a cooking process; on the basis of a relationship between a standard electrical conductivity of the food material to be cooked at a cooking moment corresponding to the first electrical conductivity and the first electrical conductivity, the initial cooking parameters are adjusted until the first electrical conductivity is equal to the standard electrical conductivity, and then the initial cooking parameters are restored; and the food material to be cooked is continuously cooked according to the initial cooking parameters, and cooking is terminated when the energy obtained by the food material to be cooked reaches preset energy required for the food material to be cooked to reach a cooked state. Thus, by monitoring the electrical conductivity of the food material in the cooking process, the relationship between the actual electrical conductivity and the standard electrical conductivity of the food material to be cooked at the corresponding cooking moment is used to reflect changes in electrolytes of the food material, and cooking parameters are adjusted according to these actual changes. By intervening and regulating the controllable factors of the cooking process, i.e. the cooking parameters, variations in the heating reaction rate of the food material during ohmic heating are compensated. Furthermore, by monitoring the energy obtained by the food material, the cooking progress is precisely controlled. As a result, on the basis of satisfying the original cooking requirements of the food, the stability and intelligence of the cooking process are improved by maintaining a constant electrical conductivity, thereby improving the usage experience of users.
2. The cooking device provided in the embodiment of the present invention is a cooking device using ohmic heating for cooking. The cooking device includes a controller that performs a cooking control method provided by another embodiment of the present invention. By monitoring the electrical conductivity of the food material in the cooking process, the relationship between the actual electrical conductivity and the standard electrical conductivity of the food material to be cooked at the corresponding cooking moment is used to reflect changes in electrolytes of the food material, and cooking parameters are adjusted according to these actual changes. By intervening and regulating the controllable factors of the cooking process, i.e. the cooking parameters, variations in the heating reaction rate of the food material during ohmic heating are compensated. Furthermore, by monitoring the energy obtained by the food material, the cooking progress is precisely controlled. As a result, on the basis of satisfying the original cooking requirements of the food, the stability and intelligence of the cooking process are improved by maintaining a constant electrical conductivity, thereby improving the usage experience of users.

### Brief Description of the Drawings

In order to more clearly illustrate specific embodiments of the present invention or technical solutions in the related art known to the inventor, in the following, accompanying drawings required for describing the embodiments of the present invention or the related art known to the inventor are introduced briefly. Apparently, the accompanying drawings in the following description show some embodiments of the present invention. Other drawings may also be obtained according to these drawings without creative efforts.
Fig. 1 is a schematic diagram of the structure of a cooking device according to an embodiment of the present invention;
Fig. 2 is a flowchart of a cooking control method according to an embodiment of the present invention;
Fig. 3 is a schematic diagram of the specific working process of a cooking device according to an embodiment of the present invention;
Fig. 4 is a schematic diagram of the structure of a cooking control apparatus according to an embodiment of the present invention;
Fig. 5 is a schematic diagram of the structure of a controller of a cooking device according to an embodiment of the present invention.

### Detailed Description of the Embodiments

In order to make objects, technical solutions and advantages of the embodiments of the present invention more apparent, the technical solutions in the embodiments of the present invention will be described below in a clearly and fully understandable way in connection with the drawings related to the embodiments of the present invention. Obviously, the described embodiments are only a part but not all of the embodiments of the present invention. On the basis of the embodiments of the present invention, all other embodiments obtained by those skilled in the art without creative efforts shall belong to the scope of protection of the present invention.

In the description of the present invention, it should be noted that the orientation or position relations indicated by the terms "central," "upper," "lower," "left," "right," "vertical," "horizontal," "inner," "outer" and the like are on the basis of the orientation or position relations shown in the drawings. It is only for convenience in describing the present invention and simplifying the description, rather than indicating or implying that the indicated device or element must have a particular orientation, or be constructed and operated in a particular orientation. Therefore, the present invention cannot be construed as being limited thereto. In addition, the terms "first," "second," and "third" are used for descriptive purposes only and are not to be construed as indicating or implying relative importance.

In the description of the present invention, it should be noted that, unless specified or limited otherwise, the terms "mounted," "connected," and "connection" should be understood broadly. For example, they may be fixed connections, detachable connections, or integral connections; they may be mechanical or electrical connections; they may also be direct connections or indirect connections via intervening structures; they may also be internal communications of two elements; and they may also be wireless or wired connections. The specific meanings of the described terms in the present invention can be understood by those skilled in the art according to specific situations.

The technical features involved in different embodiments of the present invention described below may be combined with each other as long as they do not conflict with each other.

With the improvement of national living standards, quick and convenient cooking methods have become increasingly favored and preferred by young consumers. Compared to traditional heating methods, which often result in uneven internal temperature distribution, inconsistent quality, and high energy consumption, ohmic heating, as a promising new heating method, utilizes the dielectric properties of food itself. When an electric current passes through, electrical energy is converted into thermal energy within the food, enabling uniform heating and thus widely favored by users.

Ohmic heating is currently mainly used for thermal processing of food materials such as liquids and viscous substances. Compared to traditional heating methods, such as conduction, convection, and radiation, ohmic heating has advantages including rapid and uniform heating, precise control, high electrical energy conversion efficiency, and reduced scaling and scorching on heating surfaces. However, due to reactions occurring in the properties of foods such as liquids and viscous substances in a cooking process, changes in electrolytes occur, such that it is difficult to control the reaction rate. As a result, heating reactions are often hard to manage, such that it is challenging to ensure stable cooking results.

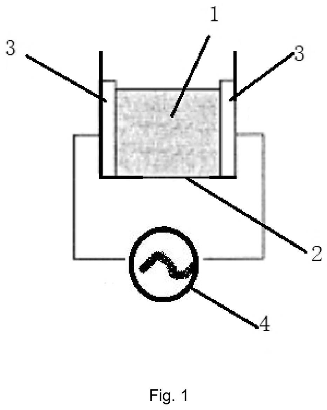

On the basis of the described problem, an embodiment of the present invention provides a cooking device. The cooking device is a cooking device using ohmic heating for cooking. The principle of ohmic heating mainly involves treating the food material as a conductor in a circuit, and using the current provided by an alternating current power supply to generate heat within the food to be heated. As shown in Fig. 1, the cooking device includes: a tank body 2 configured to hold a food material to be cooked 1 and two electrodes 3 provided on two opposite sides inside the tank body 2; and the two electrodes 3 are connected to a power supply 4 of the cooking device.

In addition, in practical applications, the cooking device further includes one or more of: an electrical conductivity measuring device, a temperature measuring device, a humidity measuring device, a timing device, a steam generator, and an air exhaust device.

The electrical conductivity measuring device is a device for measuring the electrical conductivity of the food material to be cooked 1, such as an electrical conductivity meter. By arranging a probe of the electrical conductivity meter in the tank body 2 to contact the food material to be cooked 1, the electrical conductivity of the food material to be cooked 1 can be monitored. This is provided merely as an example, and the present invention is not limited thereto. The temperature measuring device and the humidity measuring device may be separate temperature sensors and humidity sensors, or may be a combined temperature and humidity sensor, as long as they can perform the functions of monitoring temperature and humidity, and the present invention is not limited thereto. The timing device may be a standalone timer, and may also utilize a timing function integrated in a controller of the cooking device. The present invention is not limited thereto. The steam generator is configured to increase the humidity of the cooking environment; and the air exhaust device is configured to reduce the temperature of the cooking environment, and may be an exhaust fan or the like. The present invention is not limited thereto.

Specifically, the described cooking device further includes a controller. For example, the controller may be a control chip such as an MCU or a single-chip microcomputer. This is merely an example, and the present invention is not limited thereto. The controller is connected to the described components of the cooking device, and controls a cooking process of the food material to be cooked 1 by receiving relevant parameters collected by components such as the electrical conductivity measuring device and the temperature measuring device. This includes, for example, adjusting cooking parameters, controlling the operations of the steam generator and the air exhaust device, and the like, so as to achieve precise control of the entire cooking process of the food material to be cooked 1, and ensure stable cooking results. For a specific working process of the controller, reference may be made to relevant description in the following method embodiments, and details are not repeatedly described herein.

It should be noted that the described cooking device may be one of a steamer, an oven, and a steam oven. In practical applications, the cooking device may also be other cooking devices that use ohmic heating for cooking, such as a dairy industry sterilization device and other cooking devices that have functions such as thawing meat and heating and sterilizing milk and soy milk. The present invention is not limited thereto.

By means of the coordinated operation of the described components, for the cooking device provided in the embodiment of the present invention, by monitoring the electrical conductivity of the food material in the cooking process, the relationship between the actual electrical conductivity and the standard electrical conductivity of the food material to be cooked at the corresponding cooking moment is used to reflect changes in electrolytes of the food material, and cooking parameters are adjusted according to these actual changes. By intervening and regulating the controllable factors of the cooking process, i.e. the cooking parameters, variations in the heating reaction rate of the food material during ohmic heating are compensated. Furthermore, by monitoring the energy obtained by the food material, the cooking progress is precisely controlled. As a result, on the basis of satisfying the original cooking requirements of the food, the stability and intelligence of the cooking process are improved by maintaining a constant electrical conductivity, thereby improving the usage experience of users.

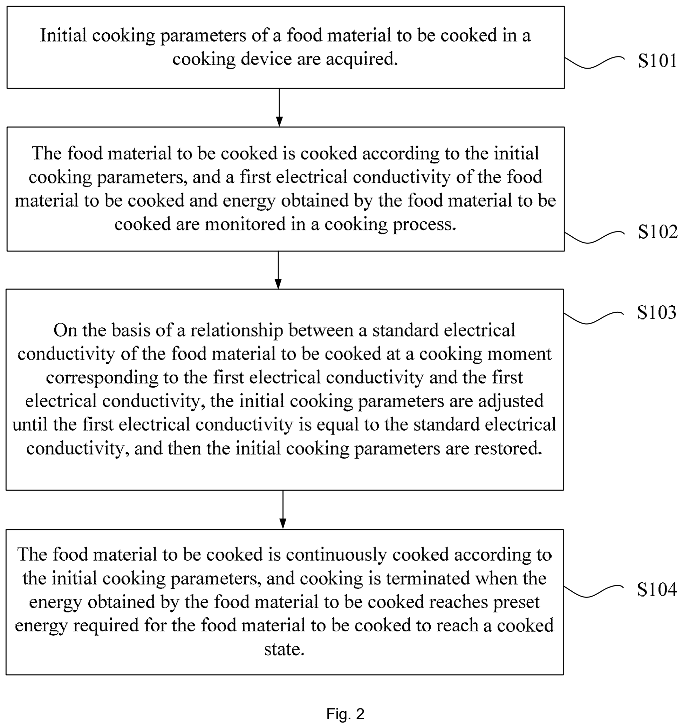

Provided in an embodiment of the present invention is a cooking control method applied to a cooking device as shown in figure 1. As shown in figure 2, the cooking control method specifically includes the following steps:
step S101: initial cooking parameters of a food material to be cooked in a cooking device are acquired.

Since different food materials require different cooking parameters during cooking, the initial cooking parameters are cooking parameters required by different food materials during cooking, which are determined in advance through extensive experiments. The initial cooking parameters include parameters such as total cooking duration, cooking temperature, and cooking humidity, which can be specifically set according to actual cooking requirements of the food materials. The present invention is not limited thereto.

Step S102: the food material to be cooked is cooked according to the initial cooking parameters, and a first electrical conductivity of the food material to be cooked and energy obtained by the food material to be cooked are monitored in a cooking process.

Specifically, in the ohmic heating cooking process, differences in the properties and placement of the food material can affect the electrolytes of the food material. Since the electrical conductivity of the food material in ohmic heating is a parameter that directly reflects changes in the electrolytes of the food material, the changes in the electrolytes of the food material in the cooking process can be understood by monitoring the electrical conductivity of the food material. Specifically, the measurement of electrical conductivity may be performed using the described electrical conductivity meter, an electrical conductivity measurement chip, or the like. The energy obtained by the food material to be cooked can directly reflect the cooking state of the food material. Assuming that the energy required for the food material to reach a cooked state is A, the current degree of doneness of the food material can be determined by monitoring the relationship between the energy obtained by the food material to be cooked and A.

Step S103: on the basis of a relationship between a standard electrical conductivity of the food material to be cooked at a cooking moment corresponding to the first electrical conductivity and the first electrical conductivity, the initial cooking parameters are adjusted until the first electrical conductivity is equal to the standard electrical conductivity, and then the initial cooking parameters are restored.

Specifically, as mentioned above, in the cooking process, the food material may undergo reactions due to the properties of the food material, causing changes in the electrolytes. If cooking is performed according to fixed cooking parameters, it may be difficult to ensure stable cooking results for each time the food material is cooked. Therefore, by adaptively adjusting the cooking parameters on the basis of the relationship between the actual electrical conductivity of the food material during cooking and the corresponding standard electrical conductivity, the adjustments to the cooking parameters can compensate for the effects on the cooking state caused by reactions in the food material during ohmic heating, thereby ensuring the final cooking results.

Step S104: the food material to be cooked is continuously cooked according to the initial cooking parameters, and cooking is terminated when the energy obtained by the food material to be cooked reaches preset energy required for the food material to be cooked to reach a cooked state.

Specifically, by cooking the same type of food material using different adjusted cooking parameters during the cooking process, differentiated cooking is achieved, avoiding the problem in conventional methods where fixed cooking parameters make it difficult to obtain stable cooking results for different cooking processes of the same food material. While improving the flexibility and adjustability of the cooking method, the stability of the cooking results is enhanced.

By means of the execution of the described steps, for the cooking control method provided in the embodiment of the present invention, by monitoring the electrical conductivity of the food material in the cooking process, the relationship between the actual electrical conductivity and the standard electrical conductivity of the food material to be cooked at the corresponding cooking moment is used to reflect changes in electrolytes of the food material, and cooking parameters are adjusted according to these actual changes. By intervening and regulating the controllable factors of the cooking process, i.e. the cooking parameters, variations in the heating reaction rate of the food material during ohmic heating are compensated. Furthermore, by monitoring the energy obtained by the food material, the cooking progress is precisely controlled. As a result, on the basis of satisfying the original cooking requirements of the food, the stability and intelligence of the cooking process are improved by maintaining a constant electrical conductivity, thereby improving the usage experience of users.

Specifically, in an embodiment, step S101 specifically includes the following steps:
Step S201: a second electrical conductivity of the food material to be cooked when the food material to be cooked is placed in the cooking device is acquired.

The second electrical conductivity is an initial electrical conductivity of the food material to be cooked when it is just placed in the cooking device and before ohmic heating is started.

Step S202: a current food material category corresponding to the second electrical conductivity is determined on the basis of a relationship between the electrical conductivity and the food material category.

Step S203: the initial cooking parameters are determined on the basis of the current food material category.

Specifically, since different food materials have different electrical conductivities, the cooking device stores a corresponding relationship between the electrical conductivities of different food material categories and their respective cooking parameters. Thus, the initial cooking parameters of the current food material to be cooked can be determined according to the corresponding relationship, thereby realizing automatic recognition of cooking parameters, without requiring users to perform separate settings or operations, further improving the intelligence of the cooking device and improving the usage experience of users.

Specifically, in an embodiment, before step S102 in which a first electrical conductivity of the food material to be cooked is monitored, the cooking control method provided by the embodiment of the present invention further includes the following steps:
Step S301: an ambient temperature of a cooking environment in which the food material to be cooked is located is monitored in a cooking process.

Specifically, the real-time ambient temperature may be acquired by providing a temperature sensor or a temperature and humidity sensor in the tank body of the cooking device.

Step S302: when the ambient temperature is in a stable state, a first electrical conductivity of the food material to be cooked is monitored.

Specifically, since in the early stage of cooking, the cooking device is in a heating phase, undergoing a full-power temperature increase process, the rate of energy transfer to the food is relatively slow, and the amount of energy received and converted by the food into its own cooking process is limited. Therefore, monitoring the electrical conductivity and intervening at this stage is of little significance, and would increase the data processing load on the controller of the cooking device. This imposes higher data processing requirements on the controller, potentially increasing the hardware costs of the controller. Therefore, whether the ambient temperature is in a stable state can be determined by determining whether the rate of change of the ambient temperature within a set time period is less than a preset rate-of-change threshold, or by determining whether the amount of change of the ambient temperature within a set time period is smaller than a preset change-amount threshold. For example, when the rate of change of the ambient temperature within the set time period is less than the preset rate-of-change threshold, or when the amount of change of the ambient temperature within the set time period is less than the preset change-amount threshold, it is determined that the ambient temperature is in a stable state. At this time, the electrical conductivity of the food material to be cooked is acquired, so that the electrical conductivity of the food material only needs to be monitored and processed when the ambient temperature is in a stable state, thereby greatly reducing the data processing volume of the controller, reducing the data processing load of the controller, and being beneficial to reducing hardware costs of the controller.

Specifically, in another alternative embodiment, the initial cooking parameters include a total cooking duration. Before step S102 in which a first electrical conductivity of the food material to be cooked is monitored, the cooking control method provided in the embodiment of the present invention further includes the following steps:
Step S401: whether a ratio of a current cooking duration to a total cooking duration reaches a preset ratio is determined.

Specifically, the preset ratio is determined according to prior experiments, representing the proportion of time during when the ambient temperature of the food material reaches a relatively stable state. At this point, the cooking device accelerates energy transfer to the food, the heating rate of the food increases, and reactions are more likely to occur, causing changes in the electrolytes.

Step S402: when the ratio of the current cooking duration to the total cooking duration reaches the preset ratio, a first electrical conductivity of the food material to be cooked is monitored.

Exemplarily, the preset ratio is 1/2, that is, when the ohmic heating is performed for half of the total cooking duration, the electrical conductivity of the food is detected and read at that moment. In this way, the electrical conductivity of the food material needs to be monitored and processed only when the cooking duration reaches a certain proportion of the total cooking duration, thereby greatly reducing the data processing volume of the controller, reducing the data processing load of the controller, and being beneficial to reducing hardware costs of the controller.

Specifically, in an embodiment, in step S102, energy obtained by the food material to be cooked is monitored in a cooking process, specifically including the following steps:
Step S501: a heating power of the cooking device for ohmic heating is monitored in a cooking process.

Specifically, this can be achieved by real-time monitoring of the current and voltage of the cooking device during the ohmic heating process, wherein the heating power is the product of the current and voltage. In addition, devices or chips with power detection functions known in the related art by the inventor can also be used for direct monitoring, and the present invention is not limited thereto.

Step S502: an integration operation is performed on the basis of a relationship between the heating power and a current cooking duration to obtain energy obtained by food material to be cooked in the cooking process.

Specifically, by cumulatively integrating the power at each moment in the cooking process, the energy obtained by the food material to be cooked is obtained; and the data is recorded, read, written, and calculated in the program and storage device of the controller. The specific calculation process is related technology known by the inventor, and will not be described in detail herein.

Specifically, in an embodiment, step S103 specifically includes the following steps:
Step S601: when the standard electrical conductivity is lower than the first electrical conductivity, a cooking temperature in the initial cooking parameters is reduced until the standard electrical conductivity is equal to the first electrical conductivity.

Specifically, the cooking temperature can be reduced gradually in a stepwise manner. Exemplarily, assuming that the cooking temperature in the initial cooking parameters is 200°C, the temperature may be decreased by 5°C every 30 seconds until the standard electrical conductivity is equal to the first electrical conductivity. The cooking temperature is then readjusted to 200°C, and cooking of the food material continues at 200°C, while other cooking parameters remain unchanged during this process. Further, the specific method for reducing the temperature can be achieved by lowering the heating power. For a cooking device with an air exhaust device, the temperature can also be reduced by activating the air exhaust device. This is merely taken as an example, and is not limited thereto. In this way, by adjusting the cooking temperature, the effects of changes in the electrolytes of the food material in the ohmic heating process on the cooking results are compensated, thereby improving the stability of the cooking results.

Step S602: when the standard electrical conductivity is greater than the first electrical conductivity, a cooking humidity in the initial cooking parameters is increased until the standard electrical conductivity is equal to the first electrical conductivity.

Specifically, the cooking humidity can be increased gradually in a stepwise manner. Exemplarily, assuming that the cooking humidity in the initial cooking parameters is 50%, the humidity can be increased by 1% every 30 seconds until the standard electrical conductivity is equal to the first electrical conductivity. Humidification is then stopped, and cooking of the food material continues at 200°C, while other cooking parameters remain unchanged during this process. Further, the specific method for reducing the temperature can be achieved by lowering the heating power. For a cooking device with an air exhaust device, the temperature can also be reduced by activating the air exhaust device. This is merely taken as an example, and is not limited thereto. In this way, by adjusting the cooking temperature, the effects of changes in the electrolytes of the food material in the ohmic heating process on the cooking results are compensated, thereby improving the stability of the cooking results.

Step S603: when the standard electrical conductivity is equal to the first electrical conductivity, the initial cooking parameters are maintained.

Specifically, if the standard electrical conductivity is equal to the first electrical conductivity in the cooking process, it indicates that the reactions occurring in the food material does not cause changes in the electrolytes and does not affect the cooking results. Maintaining the initial cooking parameters is sufficient to achieve stable cooking results.

The following will provide a detailed explanation of the specific implementation process of the cooking control method provided by the embodiment of the present invention in conjunction with specific application examples.

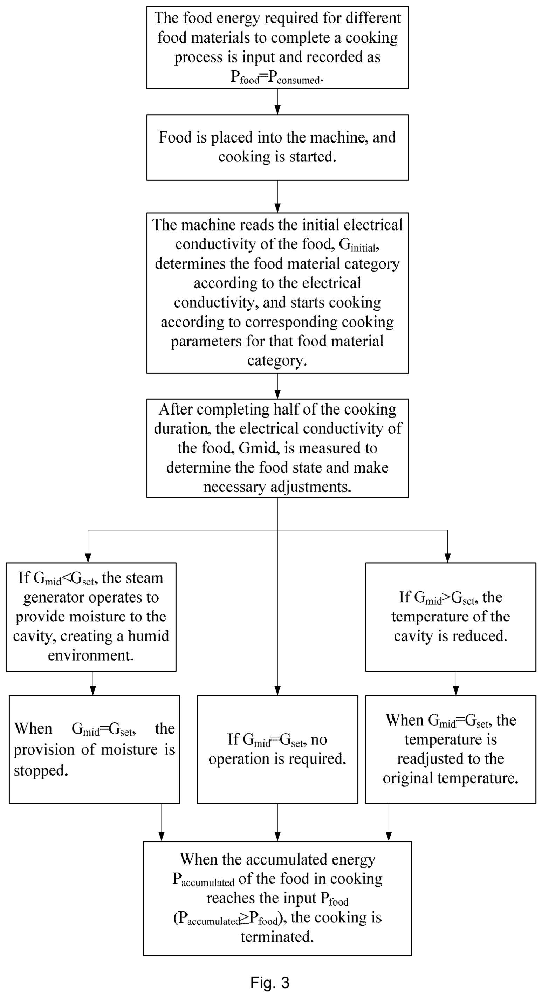

According to the intelligent cooking method using ohmic heating technology provided in the embodiment of the present invention, the changes in the electrical resistivity of food in the cooking process can be monitored throughout the cooking process according to the food material placed by the user. At the same time, the temperature and humidity in the cooking process can be adjusted intelligently according to the electrical resistivity (i.e. the electrical conductivity, which is the reciprocal of the electrical resistivity) of the food in the cooking process. The cooking environment can be adjusted before the cooking is finished, so as to maintain the stability of the cooking conditions. As shown in Fig. 3, the specific operation method is as follows:
The cooking device stores the energy required for cooking different food materials, which serves as a food cooking information repository. During the subsequent cooking process, the data can be directly accessed and utilized. The food energy required for different food materials to complete the cooking process is input and recorded as P_{food}=P_{consumed}, in which the food cooking energy may be approximately equal to the total work done by the cooking device throughout the entire cooking process.

Food is placed into the machine, and cooking is started.

The machine reads the initial electrical conductivity of the food, Gᵢₙᵢₜᵢₐₗ, determines the food material category according to the electrical conductivity, and starts cooking according to corresponding cooking parameters for that food material category.

When the ohmic heating process reaches half of the total cooking duration, the electrical conductivity of the food at that moment, G_{mid}, is measured and read. The relationship between G_{mid} and the preset Gₛₑₜ for that moment is determined (differences in the placement orientation of the food on the ohmic heating electrodes or in the state of the meat tissue can result in different resistance to ion movement along the fiber direction, leading to variations in electrical conductivity). Gₛₑₜ represents the electrical conductivity under standard experimental conditions for normally sized meat at that moment. If G_{mid}<Gₛₑₜ, the steam generator operates to provide moisture to the environment where the food is located, creating a humid environment. The electrical conductivity increases as the water content rises. When G_{mid}=Gₛₑₜ is detected, the provision of moisture is stopped, and cooking continues. If G_{mid}=Gₛₑₜ, no intervention is required, and cooking continues at the original temperature and humidity. If G_{mid}>Gₛₑₜ, the cooking temperature is reduced to decrease the electrical conductivity. When G_{mid}=Gₛₑₜ is detected, the temperature is readjusted to the original temperature (i.e. restored to the cooking temperature set at the start of cooking), and the subsequent cooking process is carried out.

The energy P_{accumulated} obtained by food in the cooking process is recorded, and real-time monitoring and statistics are performed on P_{accumulated}; and when the value of P_{accumulated} is greater than or equal to the input P_{food} (P_{accumulated}≥P_{food}), the food is assumed to be fully cooked, and the cooking process is terminated.

The embodiment of the present invention optimizes the control method of ohmic heating. On the basis of a study of the instability of the food cooking process, and taking into account the properties and rheological characteristics of the food as well as its electrical conductivity during electric heating, controllable factors in the cooking process are intervened and regulated to compensate for the limitations of ohmic heating. This enhances the cooking results under different food states and placement orientations. By doing so, the stability and intelligence of the cooking process can be improved while still satisfying the original cooking requirements of the food. It is possible to intelligently control the cooking process without compromising the advantages of ohmic heating, achieving true intelligent application of ohmic heating.

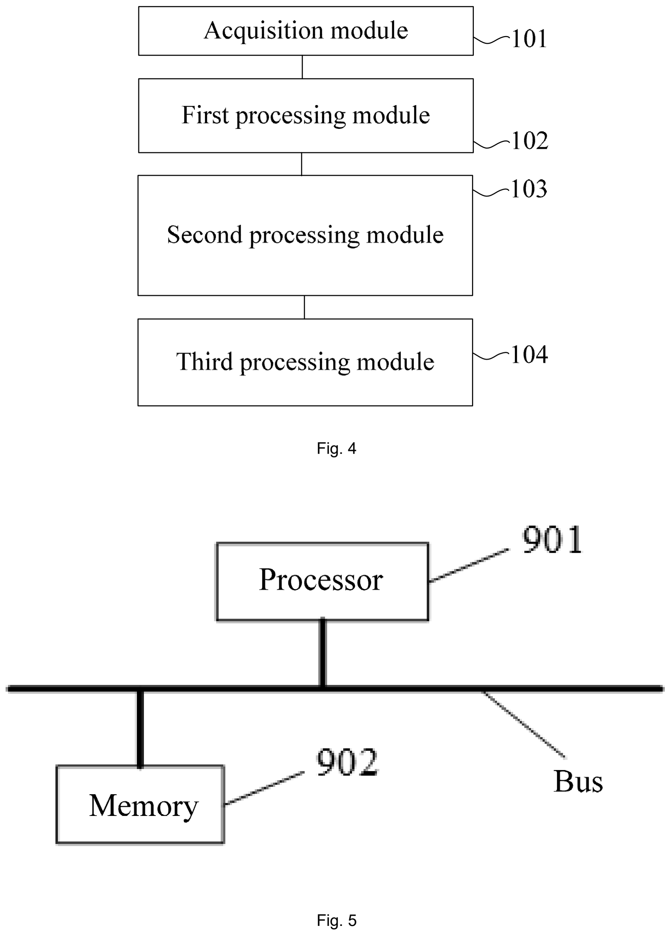

The embodiment of the present invention further provides a cooking control apparatus applied to the cooking device shown in Fig. 1. As shown in Fig. 4, the cooking control apparatus includes:
an acquisition module 101, configured to acquire initial cooking parameters of a food material to be cooked in a cooking device;
a first processing module 102, configured to cook the food material to be cooked according to the initial cooking parameters, and monitor a first electrical conductivity of the food material to be cooked and energy obtained by the food material to be cooked in a cooking process;
a second processing module 103, configured to adjust the initial cooking parameters on the basis of a relationship between a standard electrical conductivity of the food material to be cooked at a cooking moment corresponding to the first electrical conductivity and the first electrical conductivity, until the first electrical conductivity is equal to the standard electrical conductivity, and then restore the initial cooking parameters; and
a third processing module 104, configured to continuously cook the food material to be cooked according to the initial cooking parameters, and terminate cooking when the energy obtained by the food material to be cooked reaches preset energy required for the food material to be cooked to reach a cooked state.

Optionally, the acquisition module 101 is specifically configured to:
acquire a second electrical conductivity of the food material to be cooked when the food material to be cooked is placed in the cooking device;
on the basis of the relationship between electrical conductivity and food material category, determine a current food material category corresponding to the second electrical conductivity; and
determine initial cooking parameters on the basis of the current food material category.

Specifically, in an embodiment, before monitoring a first electrical conductivity of the food material to be cooked, the first processing module 102 is further configured to:
monitor an ambient temperature of a cooking environment in which the food material to be cooked is located in the cooking process; and
when the ambient temperature is in stable state, monitor a first electrical conductivity of the food material to be cooked.

Specifically, in an embodiment, the initial cooking parameters include a total cooking duration. Before monitoring a first electrical conductivity of the food material to be cooked, the first processing module 102 is further configured to:
determine whether a ratio of a current cooking duration to a total cooking duration reaches a preset ratio.
when the ratio of the current cooking duration to the total cooking duration reaches the preset ratio, monitor a first electrical conductivity of the food material to be cooked.

**In** particular, in an embodiment, the first processing module 102 monitors the energy obtained by the food material to be cooked in the cooking process, specifically configured to:
monitor a heating power of the cooking device for ohmic heating in the cooking process; and
perform an integration operation on the basis of the relationship between the heating power and the current cooking duration to obtain the energy obtained by the food material to be cooked in the cooking process.

Specifically, in an embodiment, the second processing module 103 is specifically configured to:
when the standard electrical conductivity is less than the first electrical conductivity, reduce a cooking temperature in the initial cooking parameters until the standard electrical conductivity is equal to the first electrical conductivity.

Specifically, in an embodiment, the second processing module 103 is specifically configured to:
when the standard electrical conductivity is greater than the first electrical conductivity, increase a cooking humidity in the initial cooking parameters until the standard electrical conductivity is equal to the first electrical conductivity.

Specifically, in an embodiment, the second processing module 103 is specifically configured to:
when the standard electrical conductivity is equal to the first electrical conductivity, the initial cooking parameters are maintained.

The cooking control apparatus provided in the embodiment of the present invention is configured to perform the cooking control method provided in the described embodiment, and the implementation method and principle thereof are the same. For details, reference can be made to the relevant description of the described method embodiment, and the description thereof will not be repeated.

By means of the coordinated operation of the described components, for the cooking control apparatus provided in the embodiment of the present invention, by monitoring the electrical conductivity of the food material in the cooking process, the relationship between the actual electrical conductivity and the standard electrical conductivity of the food material to be cooked at the corresponding cooking moment is used to reflect changes in electrolytes of the food material, and cooking parameters are adjusted according to these actual changes. By intervening and regulating the controllable factors of the cooking process, i.e. the cooking parameters, variations in the heating reaction rate of the food material during ohmic heating are compensated. Furthermore, by monitoring the energy obtained by the food material, the cooking progress is precisely controlled. As a result, on the basis of satisfying the original cooking requirements of the food, the stability and intelligence of the cooking process are improved by maintaining a constant electrical conductivity, thereby improving the usage experience of users.

Fig. 5 shows a schematic diagram of the structure of a controller in a cooking device according to an embodiment of the present invention. As shown in Fig. 5, the controller includes: a processor 901 and a memory 902, wherein the processor 901 and the memory 902 may be connected via a bus or in another manner. In the example shown in Fig. 5, they are connected via a bus.

The processor 901 may be a central processing unit (CPU). The processor 901 may also be a chip such as another general processor, a digital signal processor (DSP), an application specific integrated circuit (ASIC), a field-programmable gate array (FPGA), or another programmable logic device, a discrete gate or transistor logic device, or a discrete hardware component, or a combination of the foregoing chips.

As a non-transitory computer readable storage medium, the memory 902 may be configured to store a non-transitory software program, a non-transitory computer executable program, and a module, such as program instructions/modules corresponding to the method in the foregoing method embodiments. The processor 901 executes the non-transitory software program, instructions, and modules stored in the memory 902, so as to execute various functional applications of the processor and data processing, that is, to implement the method in the foregoing method embodiments.

The memory 902 may include a storage program area and a storage data area, where the storage program area may store an operating system and an application program required by at least one function; and the data storage area may store data created by the processor 901, and the like. **In** addition, the memory 902 may include a high-speed random access memory, and can further include a non-transitory memory, for example, at least one magnetic disk storage device, a flash memory device, or another non-transitory solid-state storage device. In some embodiments, the memory 902 optionally includes a memory that is remotely located relative to the processor 901, and the remote memory may be connected to the processor 901 via a network. Examples of the network include, but are not limited to, the Internet, intranets, local area networks, mobile communication networks, and combinations thereof.

One or more modules are stored in the memory 902, and when executed by the processor 901, perform the methods in the foregoing method embodiments.

The specific of the controller may be understood by referring to related descriptions and effects in the foregoing method embodiments, which are not described herein again.

Those skilled in the art may understand that all or a part of the processes of the methods in the foregoing embodiments may be implemented by a computer program instructing relevant hardware. The implemented program may be stored in a computer readable storage medium. When executed, the program may include the processes of the methods in the foregoing embodiments. The storage medium may be a magnetic disk, an optical disk, a read-only memory (ROM), a random access memory (RAM), a flash memory, a hard disk drive (HDD), a solid-state drive (SSD), or the like. The storage medium may also include a combination of the described types of memories.

Although the embodiments of the present invention have been described in conjunction with the accompanying drawings, various modifications and variations can be made by those skilled in the art without departing from the spirit and scope of the present invention, and all such modifications and variations fall within the scope defined by the appended claims.

## Claims

1. A cooking control method, applied to a cooking device using ohmic heating for cooking, wherein the method comprises:
acquiring initial cooking parameters of a food material to be cooked in the cooking device;
cooking the food material to be cooked according to the initial cooking parameters, and monitoring a first electrical conductivity of the food material to be cooked and energy obtained by the food material to be cooked in a cooking process;
on a basis of a relationship between a standard electrical conductivity of the food material to be cooked at a cooking moment corresponding to the first electrical conductivity and the first electrical conductivity, adjusting the initial cooking parameters until the first electrical conductivity is equal to the standard electrical conductivity, and then restoring the initial cooking parameters; and
continuously cooking the food material to be cooked according to the initial cooking parameters, and terminating cooking when the energy obtained by the food material to be cooked reaches preset energy required for the food material to be cooked to reach a cooked state.

2. The method according to claim 1, wherein the acquiring initial cooking parameters of the food material to be cooked in the cooking device comprises:
acquiring a second electrical conductivity of the food material to be cooked when the food material to be cooked is placed in the cooking device;
determining a current food material category corresponding to the second electrical conductivity on a basis of a relationship between electrical conductivity and food material category; and
determining the initial cooking parameters on the basis of the current food material category.

3. The method according to claim 1, wherein before monitoring the first electrical conductivity of the food material to be cooked, the method further comprises:
monitoring an ambient temperature of a cooking environment in which the food material to be cooked is located in the cooking process; and
when the ambient temperature is in a stable state, monitoring the first electrical conductivity of the food material to be cooked.

4. The method according to claim 1, wherein the initial cooking parameters comprise a total cooking duration, and before monitoring the first electrical conductivity of the food material to be cooked, the method further comprises:
determining whether a ratio of a current cooking duration to the total cooking duration reaches a preset ratio; and
when the ratio of the current cooking duration to the total cooking duration reaches the preset ratio, monitoring the first electrical conductivity of the food material to be cooked.

5. The method according to claim 1, wherein the monitoring energy obtained by the food material to be cooked in a cooking process comprises:
monitoring a heating power of the cooking device for ohmic heating in the cooking process; and
performing an integration operation on a basis of a relationship between the heating power and a current cooking duration to obtain the energy obtained by the food material to be cooked in the cooking process.

6. The method according to any one of claims 1-5, wherein the adjusting the initial cooking parameters on the basis of a relationship between the standard electrical conductivity of the food material to be cooked at the cooking moment corresponding to the first electrical conductivity and the first electrical conductivity comprises:
when the standard electrical conductivity is less than the first electrical conductivity, reducing a cooking temperature in the initial cooking parameters until the standard electrical conductivity is equal to the first electrical conductivity.

7. The method according to any one of claims 1-5, wherein the adjusting the initial cooking parameters on the basis of a relationship between a standard electrical conductivity of the food material to be cooked at a cooking moment corresponding to the first electrical conductivity and the first electrical conductivity comprises:
when the standard electrical conductivity is greater than the first electrical conductivity, increasing a cooking humidity in the initial cooking parameters until the standard electrical conductivity is equal to the first electrical conductivity.

8. The method according to any one of claims 1-5, wherein the adjusting the initial cooking parameters on the basis of a relationship between a standard electrical conductivity of the food material to be cooked at a cooking moment corresponding to the first electrical conductivity and the first electrical conductivity comprises:
when the standard electrical conductivity is equal to the first electrical conductivity, maintaining the initial cooking parameters.

9. A cooking control apparatus, applied to a cooking device using ohmic heating for cooking, wherein the apparatus comprises:
an acquisition module, configured to acquire initial cooking parameters of a food material to be cooked in the cooking device;
a first processing module, configured to cook the food material to be cooked according to the initial cooking parameters, and monitor a first electrical conductivity of the food material to be cooked and energy obtained by the food material to be cooked in a cooking process;
a second processing module, configured to adjust the initial cooking parameters on the basis of a relationship between a standard electrical conductivity of the food material to be cooked at a cooking moment corresponding to the first electrical conductivity and the first electrical conductivity, until the first electrical conductivity is equal to the standard electrical conductivity, and then restore the initial cooking parameters; and
a third processing module configured to continuously cook the food material to be cooked according to the initial cooking parameters, and terminate cooking when the energy obtained by the food material to be cooked reaches preset energy required for the food material to be to reach a cooked state.

10. A cooking device, wherein the cooking device is a cooking device using ohmic heating for cooking, and the cooking device comprises: a controller; and
the controller comprises a memory and a processor, wherein the memory and the processor are in communication connection with each other, the memory stores computer instructions, and the processor executes the computer instructions to perform the method according to any one of claims 1-8.

11. The cooking device according to claim 10, wherein the cooking device further comprises:
a tank body configured to hold a food material to be cooked and two electrodes provided on two opposite sides inside the tank body; and
the two electrodes are connected to a power supply of the cooking device.

12. The cooking device according to claim 10, wherein the cooking device is one of a steam box, an oven, and a steam oven.

13. A computer readable storage medium, wherein the computer readable storage medium stores computer instructions, and the computer instructions are configured to cause the computer to perform the method according to any one of claims 1-8.
